(19) Europäisches Patentamt
European Patent Office
Office européen des brevets

(11) EP 2 799 473 B1

(12) **EUROPEAN PATENT SPECIFICATION**

(45) Date of publication and mention
of the grant of the patent:
**21.03.2018 Bulletin 2018/12**

(51) Int Cl.:
*C08J 9/16* (2006.01)     *H01B 1/24* (2006.01)
*C08L 23/12* (2006.01)     *C08L 23/06* (2006.01)

(21) Application number: **12861315.5**

(86) International application number:
**PCT/JP2012/081624**

(22) Date of filing: **06.12.2012**

(87) International publication number:
**WO 2013/099550 (04.07.2013 Gazette 2013/27)**

(54) **POLYPROPYLENE-BASED RESIN FOAMED PARTICLES, METHOD FOR PRODUCING SAME, AND MOLDED ARTICLE OF POLYPROPYLENE-BASED RESIN FOAMED PARTICLES**

GESCHÄUMTE PARTIKEL AUS POLYPROPYLENBASIERTEM HARZ, HERSTELLUNGSVERFAHREN DAFÜR, UND FORMKÖRPER AUS GESCHÄUMTEN PARTIKELN AUS POLYPROPYLENBASIERTEM HARZ

PARTICULES EXPANSÉES DE RÉSINE DE POLYPROPYLÈNE, PROCÉDÉ DE FABRICATION ASSOCIÉ, ET CORPS MOULÉ DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2011 JP 2011284855**

(43) Date of publication of application:
**05.11.2014 Bulletin 2014/45**

(73) Proprietor: **JSP CORPORATION**
**Tokyo 100-0005 (JP)**

(72) Inventors:
• **CHIBA Takuya**
  **Yokkaichi-shi**
  **Mie 510-0881 (JP)**
• **OIKAWA Masaharu**
  **Yokkaichi-shi**
  **Mie 510-0881 (JP)**
• **SHINOHARA Mitsuru**
  **Yokkaichi-shi**
  **Mie 510-0881 (JP)**

(74) Representative: **Mai Dörr Besier**
  **European Patent Attorneys**
  **European Trademark Attorneys**
  **Patentanwälte**
  **Kreuzberger Ring 64**
  **65205 Wiesbaden (DE)**

(56) References cited:
**EP-A1- 1 486 531     JP-A- 2000 169 619**
**JP-A- 2004 083 804     JP-A- 2004 083 804**
**JP-A- 2005 023 302**

Remarks:
The file contains technical information submitted after the application was filed and not included in this specification

EP 2 799 473 B1

## Description

TECHNICAL FIELD

The present invention relates to polypropylene-based resin expanded beads, to a method for preparing same and to a polypropylene-based resin expanded beads molded article. More particularly, the present invention is directed to polypropylene-based resin expanded beads that can give a polypropylene-based resin expanded beads molded article having electrostatic dissipating properties, to a method for producing same and to a polypropylene-based resin expanded beads molded article obtained by in-mold molding of the expanded beads.

RELATED ART

Polypropylene-based resins are well-balanced in terms of mechanical strength and heat resistance. Molded articles produced by in-mold molding of expanded beads constituted of such a polypropylene-based resin as a base resin not only have excellent properties inherent in the polypropylene-based resin but also are excellent in shock-absorbing properties and in recovery from compressive strain, and are therefore used in a wide variety of applications including packaging materials for electric and electronic components and shock-absorbing materials for automobiles.
However, because polypropylene-based resins are materials with a high electrical resistance, foamed molded articles constituted of a polypropylene-based resin as a base resin tend to be electrically charged. Thus, expanded beads molded articles to which antistatic performance or conductive performance has been imparted are used as the packaging materials for electronic components and so on which must be kept away from static electricity (Patent Documents 1-5).
Patent Document 6 discloses expanded beads based on PP, wherein carbon black (CB) is present in an amount of 0.1 to 5 % by weight based on the total of base resin and thermoplastic polymer.

PRIOR ART DOCUMENTS

Patent Document

Patent Document 1: JP-A-H07-304895
Patent Document 2: JP-A-2009-173021
Patent Document 3: JP-A-H09-202837
Patent Document 4: JP-A-H10-251436
Patent Document 5: JP-A-2000-169619
Patent Document 6: EP 1 486 531 A1
Patent Document 7: JP-A-2004-083804

SUMMARY OF THE INVENTION

Problems to be Solved by the Invention

In recent years, the improvement in performance of electronic components, such as integrated circuits and hard disks, has created a demand for an electrostatically dissipative material having a surface resistivity of $1 \times 10^5$ to $1 \times 10^{10}$ $\Omega$ to prevent the electronic components from being damaged by static electricity. However, a polypropylene-based resin expanded beads molded article having a surface resistivity of $1 \times 10^5$ to $1 \times 10^{10}$ $\Omega$ has not been able to be produced stably by a conventional antistatic or conductivity-imparting treatment technology.
For example, as methods for imparting antistatic performance to a polypropylene-based resin expanded beads molded article, there are proposed a method in which expanded beads obtained by foaming and expanding resin particles containing a surfactant are in-mold molded to obtain an expanded beads molded article (as disclosed in Patent Document 1) and a method in which expanded beads obtained by foaming and expanding resin particles covered with a resin layer containing a polymeric antistatic agent are in-mold molded to obtain an expanded beads molded article (as disclosed in Patent Document 2).
These methods are effective in producing an expanded beads-molded article having antistatic performance. With a method in which an antistatic agent as described above is compounded in a polypropylene-based resin, however, it is difficult to achieve a surface resistivity of not higher than $1 \times 10^{10}$ $\Omega$ using a suitable amount of the antistatic agent, because there is a limitation in the electrical characteristics of the antistatic agent itself. When a large amount of the antistatic agent is added for the purpose of achieving a surface resistivity of not higher than $1\times10^{10}$ $\Omega$, the resulting expanded beads show considerably poor expansion property and fusion bonding property at the time of molding.

As a method for imparting electrical conductivity to a polypropylene-based resin expanded beads molded article, a method in which an electrically-conductive inorganic substance, such as an electrically-conductive carbon black or metal powder, is added to the base resin to create an electrically-conductive network of the electrically-conductive inorganic substance as disclosed in Patent Documents 3 to 5. Such a method allows the production of a polypropylene-based resin expanded beads molded article having a surface resistivity of lower than $1\times10^{5}$ $\Omega$ with ease.

In order to obtain an expanded beads molded article having a surface resistivity of $1\times10^{5}$ to $1\times10^{10}$ $\Omega$ by a method using an electrically-conductive inorganic substance, it is thought effective to reduce the content of the electrically-conductive inorganic substance. However, a so-called percolation phenomenon, in which the surface resistivity shows a sharp discontinuous change, occurs when the content of electrically-conductive inorganic substance is reduced to a certain level (percolation threshold). It is, therefore, difficult to achieve a surface resistivity in the range of $1\times10^{5}$ to $1\times10^{10}$ $\Omega$ in a stable manner.

In particular, a polypropylene-based resin expanded beads molded article shows a drastic discontinuous change in its surface resistivity in a region close to the percolation threshold. One possible reason for this is the fact that at least two expansion steps, primary expansion of resin particles into expanded beads and secondary expansion of the expanded beads during in-mold molding, are necessary to obtain an expanded beads molded article. Namely, it is considered to be very difficult to stably achieve a surface resistivity of $1\times10^{5}$ to $1\times10^{10}$ $\Omega$ because of difficulty of controlling the distance between the electrically-conductive carbon black particles in the polypropylene-based resin during the expansion that takes place in these steps.

The above method has another problem that even a slight difference in dispersion state of the electrically-conductive inorganic substance results in a significant variation in the surface resistivity of the expanded beads-molded article. Thus, even when the expanded beads molded article has a desired performance as a whole, some portions of the molded article may have a surface resistivity outside the desired range.

It is, therefore, an object of the present invention to provide polypropylene-based resin expanded beads that excel in expansion property and fusion bonding property during molding and that are capable of giving a polypropylene-based resin expanded beads molded article which can stably exhibit electrostatic dissipating properties of a surface resistivity range of $1\times10^{5}$ to $1\times10^{10}$ $\Omega$ while maintaining excellent properties inherent in the polypropylene-based resin, and to provide a polypropylene-based resin expanded beads molded article obtained by in-mold molding of such expanded beads.

Means for Solving the Problems:

In accordance with the present invention, there are provided polypropylene-based resin expanded beads and a polypropylene-based resin expanded beads molded article, as follows:

> the carbon black is unevenly distributed to the dispersed phases side,
> the polyethylene resin being an ethylene homopolymer or a copolymer of ethylene and $C_4$ to $C_6$ $\alpha$-olefin,
> the polypropylene resin and polyethylene resin are present in such a proportion as to provide a weight ratio of the polypropylene resin to the polyethylene resin of 99.5:0.5 to 65:35, and
> the expanded bead has an apparent density of 10 to 120 kg/m$^3$.

> [2] The polypropylene-based resin expanded bead according to above [1], wherein the ethylene resin is a linear low density polyethylene and/or a high density polyethylene.
> [3] The polypropylene-based resin expanded bead according to above [1] or [2], wherein the electrically conductive carbon black is Ketjen black and present in an amount of 6 to 14 parts by weight per 100 parts by weight of the based resin.
> [4] A molded article comprising the expanded beads according to any one of above [1] to [3], which are integrally fusion-bonded together, said molded article having a surface resistance of $1\times10^{5}$ to $1\times10^{10}$ $\Omega$.
> [5] A method for preparing polypropylene-based resin expanded beads, comprising melting and kneading, in the presence of electrically conductive carbon black, a base resin containing 99.5 to 65% by weight of a polypropylene resin and 0.5 to 35% by weight of at least one polyethylene resin selected from ethylene homopolymers and copolymers of ethylene and $C_4$ to $C_6$ $\alpha$-olefin, forming the resulting kneaded product into resin particles, and foaming and expanding the resin particles to produce the expanded beads having an apparent density of 10 to 120 kg/m$^3$.
> [6] The method for preparing polypropylene-based resin expanded beads according to above [5], wherein the polyethylene resin is a linear low density polyethylene and/or a high density polyethylene.
> [7] The method for preparing polypropylene-based resin expanded beads according to above [5] or [6], wherein the resin particles are constituted of the polypropylene resin which forms a continuous phase and the polyethylene resin which forms a dispersed phases dispersed in the continuous phase.
[8] The method for preparing polypropylene-based resin expanded beads according

[1] An electrostatic dissipative, polypropylene-based resin expanded bead that is constituted of a base resin containing a polypropylene resin as a major component and that contains electrically conductive carbon black, wherein the base resin comprises the polypropylene resin which forms a continuous phase and a polyethylene resin which forms dispersed phases dispersed in the continuous phase,

the carbon black is Ketjen black or acetylene black and is unevenly distributed to the dispersed phases side, the polyethylene resin being an ethylene homopolymer or a copolymer of ethylene and $C_4$ to $C_6$ $\alpha$-olefin,

the polypropylene resin and polyethylene resin are present in such a proportion as to provide a weight ratio of the polypropylene resin to the polyethylene resin of 98:2 to 85:15,

the expanded bead has an apparent density of 10 to 120 kg/m$^3$,

the Ketjen black is present in an amount of 6 to 14 parts by weight per 100 parts by weight of the based resin and the acetylene black is present in an amount of 23 to 27 parts by weight per 100 parts by weight of the base resin, and

wherein the carbon black has an average particle size of 10 to 80 nm.

[2] The polypropylene-based resin expanded bead according to above [1], wherein the ethylene resin is a linear low density polyethylene and/or a high density polyethylene.

[3] A molded article comprising the expanded beads according to above [1] or [2] which are integrally fusion-bonded together, said molded article having a surface resistance of $1 \times 10^5$ to $1 \times 10^{10}$ $\Omega$.

[4] A method for preparing polypropylene-based resin expanded beads, comprising melting and kneading, in the presence of electrically conductive carbon black being selected from Ketjen black or acetylene black, a base resin containing 98 to 85% by weight of a polypropylene resin and 2 to 15% by weight of at least one polyethylene resin selected from ethylene homopolymers and copolymers of ethylene and $C_4$ to $C_6$ $\alpha$-olefin, forming the resulting kneaded product into resin particles, and foaming and expanding the resin particles to produce the expanded beads having an apparent density of 10 to 120 kg/m$^3$, wherein if the electrically conductive carbon black is Ketjen black it is present in an amount of 6 to 14 parts by weight per 100 parts by weight of the based resin and if the electrically conductive carbon black is acetylene black it is present in an amount of 23 to 27 parts by weight per 100 parts by weight of the base resin, and wherein the carbon black has an average particle size of 10 to 80 nm.

[5] The method for preparing polypropylene-based resin expanded beads according to above [4], wherein the polyethylene resin is a linear low density polyethylene and/or a high density polyethylene.

[6] The method for preparing polypropylene-based resin expanded beads according to above [4] or [5], wherein the resin particles are constituted of the polypropylene resin which forms a continuous phase and the polyethylene resin which forms a dispersed phases dispersed in the continuous phase.

Effect of the Invention:

In-mold molding of the polypropylene-based resin expanded beads according to the present invention now makes it possible to stably obtain a polypropylene-based resin expanded beads molded article having a middle region of a surface resistivity in the range of $1 \times 10^5$ to $1 \times 10^{10}$ $\Omega$ (hereinafter occasionally referred to as "electrostatic dissipating properties"), which has been hitherto difficult to be produced in a stable manner. The molded article obtained from the polypropylene-based resin expanded beads according to the present invention shows smaller change in its surface resistivity due to changes in molding conditions and molding devices, compared with the conventional polypropylene-based resin expanded beads molded article containing an inorganic electrically conductive material, and exhibits electrostatic dissipative properties in a stable manner even when the article has a complicated shape.

BRIEF DESCRIPTION OF THE DRAWINGS

FIG. 1 is a microphotograph of a cross-section of a cell wall of an expanded bead obtained in Example 3, showing a sea-island structure formed of a polypropylene resin and a polyethylene resin;

FIG. 2 is a microphotograph of a cross-section of a cell wall of an expanded bead obtained in Example 3, showing a dispersed state of electrically conductive carbon black;

FIG. 3 is a microphotograph of a cross-section of a cell wall of an expanded bead obtained in Comparative Example 1, showing a dispersed state of electrically conductive carbon black; and

FIG. 4 is a diagram showing an example of a first heating run DSC curve.

EMBODIMENTS OF THE INVENTION

Description is hereinafter made of a polypropylene-based resin expanded bead of the present invention. As used herein, the term "polypropylene-based resin" is intended to refer to a resin composition containing a polypropylene resin as its major ingredient. More specifically, the polypropylene-based resin is a resin composition containing a polypropylene resin as its major ingredient and a polyethylene resin. The expanded bead of the present invention is constituted of the resin composition. The resin composition will be occasionally referred to in the present specification as "base resin". For the purpose of brevity of description, "polypropylene-based resin expanded bead(s)" of the present invention will be referred to as "expanded bead(s)", "polypropylene resin" will be referred to as "PP resin", "polyethylene resin" will be referred to as "PE resin", "electrically conductive carbon black" will be referred to as "CB" and "expanded beads molded article" will be referred to as "molded article", occasionally.

The expanded bead has a plurality of cells defined by cell walls that are constituted of a base resin containing a PP resin and a PE resin. The PP resin forms a continuous phase (matrix phase), while the PE resin forms dispersed phases (domain phases) discontinuously dispersed in the continuous phase. Namely, the base resin of the expanded bead has a so-called "sea-islands structure". To the dispersed phases side, CB is distributed unevenly.

The term "PP resin" as used herein refers to a resin containing 50% by weight or more of a propylene component unit. Examples of the PP resin include propylene homopolymers and copolymers of propylene with other olefin(s) copolymerizable therewith. Examples of the olefin copolymerizable with propylene include ethylene and $\alpha$-olefins having four or more carbon atoms, such as 1-butene. The copolymers may be random copolymers or block copolymers and may be binary copolymers or ternary copolymers. These PP resins may be used singly or as a mixture of two or more thereof.

The term "PE resin" as used herein refers to a resin containing 50% by weight or more, preferably 70% by weight or more, more preferably 80% by weight or more, still more preferably 90% by weight or more, of an ethylene component unit, and may be an ethylene homopolymer or a copolymer of ethylene with an $\alpha$-olefin(s) having 4 to 6 carbon atoms. Examples of the PE resin include high density polyethylene, low density polyethylene, linear low density polyethylene, very low density polyethylene, and mixtures of two or more thereof.

The CB used in the present invention preferably has a dibutyl phthalate (DBP) oil absorption amount of 150 to 700 ml/100 g, more preferably 200 to 600 ml/100 g, even more preferably 300 to 600 ml/100 g. Examples of the CB include acetylene black and Ketjen black. The DBP oil absorption amount is measured according to ASTM D2414-79. The CB may be used singly or in combination of two. Among these, Ketjen black is preferred because a high electrical conductivity can be achieved with the use of a small amount thereof.

In general, when CB is dispersed in a thermoplastic resin such as PP resin, electrical conductivity is generated because of the formation of an electrically conductive net-work structure in which adjacent CB particles are positioned relative to each other within a given distance. In the case of CB-containing conductive PP resin expanded beads in which a sufficient amount of CB is incorporated, a large number of CB particles are still present sufficiently close to each other in the PP resin even after the PP resin has been expanded and stretched. As a consequence, the electrically conductive network structure is maintained and, hence, the molded article obtained from such expanded beads exhibits an electrical conductivity to provide a surface resistivity lower than $1 \times 10^4$ W.

When the content of CB is reduced with a view toward achieving a medium degree of surface resistivity and obtaining electrostatic dissipating properties, the distance between the CB particles increases. Therefore, the number of CB particles present within the above-mentioned given distance is so small that it is difficult to form an electrically conductive network even before foaming. Thus, as the adding amount of CB decreases, so-called percolation phenomenon occurs and, therefore, the surface resistivity increases significantly. Additionally, in the case of a foam material, because the distance between the CB particles further increases as a result of stretching of the cell walls during the foaming and during the in-mold molding, it becomes more difficult to maintain the electrically conductive network. Therefore, a significant change in surface resistivity occurs and, therefore, it is difficult to achieve the electrostatic dissipating properties.

In the expanded beads of the present invention, the base resin forms a sea-islands structure composed of a PP resin continuous phase and PE resin dispersed phases with the CB being distributed unevenly to the dispersed phases side.

When a PP resin and a PE resin are melted and kneaded together with CB, the CB is distributed unevenly to the side of the PE resin which has a lower glass transition temperature than that of the PP resin, so that the concentration of the CB in the PE resin phase is higher than that in the PP resin phase. Namely when the above three components are kneaded in such a way that the PE resin is dispersed in the PP resin, namely in such a way as to form a sea phase of the PP resin and island phases of the PE resin, the CB is distributed unevenly to the side of the PE resin dispersed phases that are dispersed in the PP resin continuous phase.

Thus, in the expanded beads of the present invention, the CB is present primarily in the PE resin dispersed phases dispersed in the PP resin continuous phase and forms an electrically conductive network in the dispersed phases. Because the CB is restrained in the PE resin, the movement thereof is restricted and the distance between CB particles does not significantly increase at the time of foaming. It is inferred that, for this reason, the electrically conductive network of the CB in the dispersed phases is maintained after the foaming, while the volume resistivity of the dispersed phases has such a low value as to show electrical conductivity. In the meantime, as long as the intended objects of the present invention are not adversely affected, the CB may be also present in the PP resin continuous phase in a small amount.

In addition, the PE resin of the present invention, namely a polyethylene homopolymer or a copolymer of ethylene with an $\alpha$-olefin(s) having 4 to 6 carbon atoms, has a moderate affinity with the PP resin but is not completely compatible therewith. Thus, the PE resin is not considered to be excessively finely dispersed in the continuous phase of the PP resin. Further, the PE resin dispersed phases are considered not to excessively deform following the deformation of the PP resin continuous phase during the foaming. For this reason, the dispersed phases, which themselves show electrical conductivity, can maintain between them a distance that is necessary to ensure the desired electrostatic dissipating properties. Accordingly, the expanded beads can exhibit the desired electrostatic dissipating properties in a stable manner independently from the apparent density (expansion ratio) thereof, in other words, even when the expansion ratio is changed. Further, because there is little danger of breakage of the cell walls during the foaming, the expanded beads obtained show desired mechanical strength. When the $\alpha$-olefin which is used as a copolymerized component of the PE resin has more than 6 carbon atoms, the PE resin has an increased affinity with the PP resin and, therefore, is finely dispersed in the PP resin. In this case, the distance between the dispersed phases becomes so close to each other that there is a possibility that the electrostatic dissipating properties cannot be achieved.

Among the above-mentioned PE resins, linear low density polyethylene and high density polyethylene are preferred, and linear low density polyethylene is more preferred from the view point of mechanical strength of the molded article obtained. The linear low density polyethylene (PE-LLD) is generally a copolymer of ethylene with an $\alpha$-olefin such as butene and hexene and has a density of generally 0.88 g/cm$^3$ or higher and lower than 0.94 g/cm$^3$, preferably 0.91 g/cm$^3$ or higher and lower than 0.94 g/cm$^3$. The high density polyethylene (PE-HD) is generally a homopolymer of ethylene or a copolymer of ethylene with butene and has a density of generally 0.94 g/cm$^3$ or higher, preferably 0.94 to 0.97 g/cm$^3$.

The mixing proportion of the PP resin to the PE resin in terms of weight ratio is 98:2 to 85:15. When the proportion of the PE resin is excessively low, not only that portion of the CB which is not unevenly distributed to the PE resin dispersed phases side is increased but also the distance between PE resin dispersed phases is increased. As a result, it is difficult to stably achieve the desired surface resistivity. On the other hand, when the proportion of the PE resin is excessively high, not only it becomes difficult to form the PE resin dispersed phases but also the distance between PE resin dispersed phases is decreased. As a result, it is also difficult to stably achieve the desired surface resistivity.

The base resin of the expanded beads according to the present invention may contain an additional thermoplastic resin or thermoplastic elastomer other than the PP resin and the PE resin to the extent that the intended purpose is not impaired (in particular, it is important that the kind and the amount of these thermoplastic resin and thermoplastic elastomer should not impair the formation of the above-described sea-island structure). Examples of the thermoplastic resin include polystyrene-based resins such as polystyrene, impact-resistant polystyrene and styrene-acrylonitrile copolymers, acrylic-based resins such as methyl polymethacrylate, and polyester-based resins such as polylactic acid and polyethylene terephthalate. Examples of the thermoplastic elastomer include olefin-based elastomers such as ethylene-hexene copolymers and ethylene-propylene-diene copolymers, and styrene-based elastomers such as styrene-butadiene-styrene block copolymers, styrene-isoprene-styrene block copolymers, and hydrogenated products thereof.

The mixing proportion of the CB is not generally determined because the electrical conductivity varies with the kind of the CB. When Ketjen black is used as the CB, for example, the amount thereof is preferably 6 to 14 parts by weight, more preferably 7 to 13 parts by weight, still more preferably 8 to 12 parts by weight, per 100 parts by weight of the base resin in order to achieve a medium degree of surface resistivity in the range of $1 \times 10^5$ to $1 \times 10^{10}$ $\Omega$. When acetylene black is used as the CB, the amount thereof is preferably 23 to 27 parts by weight, more preferably 24 to 26 parts by weight, per 100 by weight of the base resin. Ketjen black is preferred because a desired surface resistivity can be achieved with the use of a small amount thereof.

From the view point of dispersibility of the CB in the PE resin dispersed phases, the average particle size is 10 to 80 nm, preferably 15 to 60 nm.

The average particle size of the CB is measured using an electron microscope. Specifically, electron microscope photographs of the CB are taken so that several hundred particles thereof are contained in each field of view. The diameters in a specific direction (Green diameters) of randomly selected 1,000 particles are measured. Then, a number-based cumulative distribution curve is created from the obtained values, and the 50% cumulative diameter in the number-based distribution is adopted as the average particle size.

For reasons of forming the above-described dispersion structure in a stable manner in the present invention, it is preferred that the melting point of the PE resin is in the range of 30 to 150°C and, at the same time, is lower than that of the PP resin. When the melting point of the PE resin is in the above-described range, the PE resin dispersed phases can sufficiently follow the stretching of the cell walls during expansion stage. As a consequence, an electrically conductive net-work structure between the PE resin dispersed phases may be easily formed without breakage of the cell structure of the expanded beads. A melting point of the PE resin lower than 30°C is not problematic from the standpoint of maintenance of the cell structure but may tend to cause deterioration of the mechanical strength of the resulting molded article.

The PE resin which constitutes the base resin of the expanded beads preferably has a melt flow rate (MFR) which is 0.001 to 15 times that of the PP resin. The MFR of the PE resin is more preferably 0.001 to 11 times, still more preferably 0.001 to 10 times, that of the PP resin for reasons of stable formation of the above-described dispersion structure.

The PP resin may be one that is conventionally used as a base resin of expanded beads and that has a melt flow rate (MFR) of 0.1 to 30 g/10 min. The MFR of the PP resin is more preferably 2 to 20 g/10 min, still more preferably 3 to 15 g/10 min. The MFR of the PE resin (A) is generally 0.001 to 100 g/10 min, more preferably 0.01 to 90 g/10 min. The MFR of the PE resin and PP resin is measured according to the test condition M of JIS K7210 (1999) at a temperature of 230°C and a load of 2.16 kg.

The expanded beads of the present invention suitably have an apparent density of 10 to 120 kg/m³ for reasons that the distance between the dispersed phases required to provide a surface resistivity in the range of $1 \times 10^5$ to $1 \times 10^{10}$ Ω may be achieved in a stable manner. From this point of view, the apparent density of the expanded beads is preferably 12 to 90 kg/m³, more preferably 15 to 60 kg/m³, still more preferably 20 to 50 kg/m³.

As used herein, the apparent density of the expanded beads may be determined as follows. In a measuring cylinder containing water at 23°C, a group of the expanded beads (the weight of the expanded beads group is W [g]) are immersed using a wire net. From a rise of the water level, the volume V [cm³] of the expanded beads group is determined. The apparent density is calculated by dividing the weight of the expanded beads placed in the measuring cylinder by the volume thereof (WN), followed by unit conversion into [kg/cm³].

When low apparent density expanded beads are to be produced, it is desirable to conduct so-called two-step expansion in which expanded beads are first produced by so-called dispersing medium release foaming method, the obtained expanded beads being thereafter subjected to a further expansion treatment. In the two-step expansion, the expanded beads are charged in a pressure resistant closed vessel and are subjected to a pressurizing treatment using a pressurized gas such as air so that the inner pressure of the expanded beads is increased to 0.01 to 0.6 MPa(G). The resulting expanded beads are then taken out of the vessel and heated with a heating medium such as steam thereby to obtain expanded beads having a low apparent density.

The expanded beads preferably have an average cell diameter of 20 to 400 μm, more preferably 40 to 200 μm. When the average cell diameter is excessively small, the cell walls become so thin that the cells are apt to be broken by heating in the molding stage, causing reduction of the close cell content. This results in deterioration of the dimension recovering ability at the time of molding and in reduction of compressive properties of the molded article. When the average cell diameter is excessively large, on the other hand, the cell wall thickness is so increased that a significant heat is required to melt surfaces of the resin at the time of heating for molding. Thus, it is necessary to increase the molding pressure so as to prevent deterioration of the fusion bonding between beads at the time of molding. This causes a possibility that the production efficiency is reduced.

As used herein, the average cell diameter of the expanded beads is measured as follows. One expanded bead is cut into nearly equal halves. From an enlarged image of the cross section taken by a microscope, the average cell diameter is determined as follows. On the enlarged image of the cross section of the expanded bead, four line segments each passing nearly through the center of the cross section and extending from one surface of the expanded bead to the other surface thereof are drawn such that eight angularly equally spaced straight lines extend radially from nearly the center of the cross section toward the external surface of the expanded bead. A total number (N) of the cells that intersect the above four line segments is counted. Also measured is a total length (L (μm)) of the four line segments. The value (L/N) obtained by dividing the total length L by the total number N is an average cell diameter of the expanded bead. Similar procedures are repeated for 10 expanded beads in total. The arithmetic mean of the average cell diameters of the ten expanded beads represents the average cell diameter of the expanded beads.

The expanded beads preferably have a closed cell content of 75% or more, more preferably 80% or more, still more preferably 82% or more. When the closed cell content is excessively small, the expanded beads tend to deteriorate in the secondary expansion property thereof and to give a molded article having reduced mechanical properties.

As used herein, the closed cell content of the expanded beads is measured as follows. The expanded beads are allowed to stand for 10 days for aging in a thermostatic chamber at 23°C under atmospheric pressure and a relative humidity of 50%. In the same thermostatic chamber, about 20 cm$^3$ bulk volume of the expanded beads thus aged are sampled and measured for the precise apparent volume Va by a water immersion method described below. The sample beads whose apparent volume Va has been measured are fully dried and measured for their true volume Vx according to Procedure C of ASTM D-2856-70 using Air Comparison Pycnometer model-930 manufactured by Toshiba Beckman Inc. From the volumes Va and Vx, the closed cell content is calculated by the formula (4). The average (N=5) is the closed cell content of the expanded beads.

$$\text{Closed cell content (\%)} = (Vx - W/\rho) \times 100/(Va - W/\rho) \qquad (4)$$

wherein

Vx represents the true volume (cm$^3$) of the expanded beads measured by the above method, which corresponds to a sum of a volume of the resin constituting the expanded beads and a total volume of all the closed cells in the expanded beads, Va represents an apparent volume (cm$^3$) of the expanded beads, which is measured by a rise of the water level when the expanded beads are immersed in water contained in a measuring cylinder,
W is a weight (g) of the sample expanded beads used for the measurement; and
$\rho$ is a density (g/cm$^3$) of the resin constituting the expanded beads.

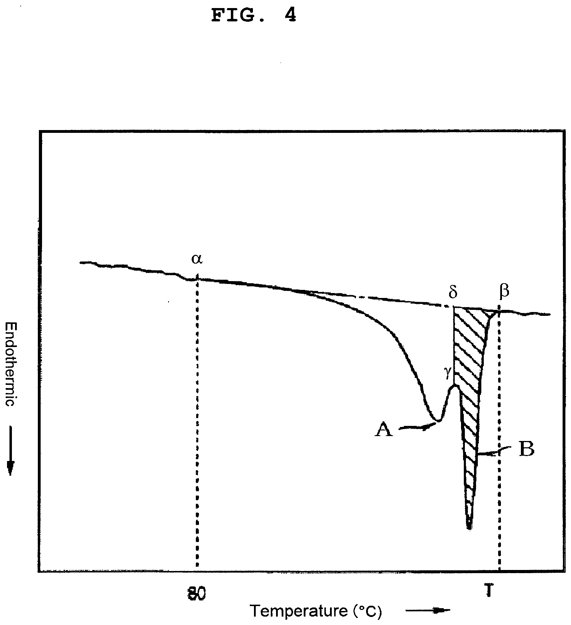

It is also preferred that the expanded beads of the present invention have secondary crystals and that the heat of fusion of the secondary crystals as measured by differential thermal analysis is 1 to 30 J/g. Namely, it is preferred that the expanded beads, when measured by heat flux differential scanning calorimetry in which 2 to 10 mg thereof are heated from 23°C to 220°C at a heating rate of 10°C/min, give a DSC curve (first heating run DSC curve) having an endothermic peak "A" which is intrinsic to the PP resin (hereinafter occasionally referred to simply as "intrinsic peak") and one or more endothermic peaks "B" (hereinafter occasionally referred to simply as "high temperature peak") which are located on a higher temperature side of the endothermic peak "A" and which have a heat of fusion of 1 to 30 J/g. When the calorific value of the high temperature peak is within the above range, the expanded beads show excellent fusion bonding properties during molding and can give a molded article having excellent mechanical strength.
The upper limit of the calorific value of the high temperature peak is preferably 18 J/g, more preferably 17 J/g, still more preferably 16 J/g, while the lower limit thereof is preferably 4 J/g. Incidentally, the high temperature peak may be controlled by any known manner such as by a method disclosed in Japanese Kokai Publication No. JP-A-2001-151928.
As used herein, the first heating run DSC curve, intrinsic peak calorific value and high temperature peak calorific value are measured by a measuring method according to JIS K7122(1987) as follows. Expanded beads (2 to 10 mg) are sampled and heated using a differential scanning calorimeter from 23°C to 220°C at a heating rate of 10°C/minute to obtain a first heating run DSC curve an example of which is shown in FIG. 4.
The DSC curve shown in FIG. 4 has an intrinsic peak "A" attributed to the PP resin which constitutes the expanded beads and a high temperature peak "B" located on a high temperature side of the intrinsic peak. The calorific value of the high temperature peak "B" corresponds to the area of the peak and is determined in the manner specifically described below.
First, a straight line (α-β) extending between a point α on the DSC curve at 80°C and a point β on the DSC curve at a melting completion temperature T of the expanded beads is drawn. The melting completion temperature T is a temperature of an intersection at which the DSC curve on a high temperature side of the high temperature peak "B" meets the base line. Next, a line which is parallel with the ordinate and which passes a point γ on the DSC curve at the bottom of the valley between the intrinsic peak "A" and the high temperature peak "B" is drawn. This line crosses the line (α-β) at a point δ. The area of the high temperature peak "B" is the area (shaded portion in FIG. 4) defined by the curve of the high temperature peak "B", the line (δ-β) and the line (γ-δ), and corresponds to the calorific value of the high temperature peak.
Incidentally, the high-temperature peak "B" appears in the DSC curve measured in the first heating run as described above, but does not appear in the DSC curve obtained during heating in the second run. In the second heating run DSC curve, only the endothermic peak inherent in the PP resin forming the expanded beads is present.
A method for producing the PP resin expanded particles of the present invention will be next described. The expanded beads may be produced by the following method. The expanded beads may be produced by so-called dispersing medium release foaming method as follows. The PP resin, PE resin and CB are melted and kneaded to prepare resin particles. The resin particles are dispersed in an aqueous medium, such as water, contained in a closed vessel such as autoclave together with a physical blowing agent, etc. The aqueous medium is then heated to a temperature not lower than the softening point of the resin particles to impregnate the resin particles with the blowing agent. While maintaining the pressure inside the closed vessel at a pressure not lower than the vapor pressure of the blowing agent, an end portion of the closed vessel that is located beneath the water level is opened to release the blowing agent-impregnated, expandable resin particles together with the aqueous medium such as water from the closed vessel to an atmosphere which is maintained at a pressure lower than that in the vessel, generally the atmospheric pressure, to foam and expand the resin particles.

Alternatively, the expandable resin particles which contain a physical blowing agent may be taken out of the closed vessel and then heated with a heating medium such as steam to foam and expand the resin particles. Further, when resin particles are prepared using an extruder, a blowing agent may be injected into the extruder to form an expandable molten resin composition. The expanded beads may be obtained by extruding the expandable molten resin composition through a die to foam and expand the extrudate.

The above-mentioned resin particles may be prepared by first feeding a blend of the PP resin, PE resin and CB having the previously described formulation to an extruder together with an optional additive such as a cell controlling agent. The mixture is heated, kneaded and then extruded through a die in the form of a plurality of strands. The strands are then cooled by being passed through water and then cut into an appropriate length to obtain the resin particles. Alternatively, the molten resin composition may be extruded through a die into water where it is simultaneously cut and cooled to obtain the resin particles.

In the present invention, it is necessary to produce resin particles having a structure in which the PP resin forms a continuous phase and the PE resin forms dispersed phases dispersed in the continuous phase with the CB being contained in the PE resin. To achieve this structure, the PP resin, PE resin and CB may be directly fed to the extruder. However, it is preferable to previously prepare a master batch in which the CB is dispersed in the PP resin. The master batch is then mixed with the PE resin and, if necessary, a required amount of the PP resin, and the resulting mixture is kneaded using an extruder, etc.

The concentration of the CB in the master batch is preferably 5 to 50% by weight, more preferably 8 to 30% by weight, still more preferably 9 to 25% by weight. The master batch preferably contains an olefin-based elastomer for the purpose of improving the dispersibility of the CB in the master batch. The olefin-based elastomer is preferably contained in the master batch in an amount of 3 to 10% by weight. Examples of the olefin-based elastomer include an ethylene-octene copolymer elastomer and an ethylene-propylene-diene copolymer elastomer.

In order to control the cell diameter of the expanded beads, a cell controlling agent is preferably added. As the cell controlling agent, there may be used an inorganic material such as talc, calcium carbonate, borax, zinc borate, aluminum hydroxide and alum. The cell controlling agent is preferably used in an amount of 0.001 to 10 parts by weight, more preferably 0.01 to 5 parts by weight, per 100 parts by weight of the base resin. Although the cell controlling agent may be added as such to the base resin, it is generally preferred that the cell controlling agent is added in the form of a master batch thereof for reasons of improved dispersion state.

The resin particles preferably have a weight per particle of 0.02 to 20 mg, more preferably 0.1 to 6 mg, since the expanded beads obtained therefrom can be uniformly filled in a mold cavity.

In the dispersing medium release foaming method, resin particles with a non-spherical shape may be deformed into a spherical shape due to the surface tension of a dispersing medium acted on the resin particles when the resin particles are heated and plasticized in the closed vessel.

The discharge of the resin particles from a higher pressure zone in which no foaming thereof takes place to a lower pressure zone in which the foaming thereof takes place is generally performed such that a difference in pressure therebetween is at least 400 kPa, preferably 500 to 15,000 kPa.

The blowing agent used in the dispersing medium release foaming method may be an organic physical blowing agent such as propane, isobutane, butane, isopentane, pentane, cyclopentane, hexane, cyclobutane, cyclohexane, chlorofluoromethane, trifluoromethane, 1,1,1,2-tetrafluoroethane, 1-chloro-1,1-difluoroethane, 1,1-difluoroethane and 1-chloro-1,2,2,2-tetrafluoroethane, or an inorganic physical blowing agent such as nitrogen, carbon dioxide, argon and air. For reasons of low costs and freedom of destruction of the ozone layer, the use of inorganic physical blowing agent, especially air, nitrogen and carbon dioxide is preferred. The above blowing agents may be used in combination of two or more thereof.

The amount of the blowing agent is determined as appropriate in view of the intended apparent density of the expanded beads and the temperature at which the foaming is carried out. In particular, the blowing agent other than nitrogen and air is generally used in an amount of 2 to 50 parts by weight per 100 parts by weight of the resin particles. In the case of nitrogen and air, the blowing agent is used in an amount so that the pressure within the closed vessel is in the range of 10 to 70 $kgf/cm^2$(G).

As the dispersing medium for dispersing the resin particles in the closed vessel, water is preferred. However, other media, such as ethylene glycol, glycerin, methanol and ethanol, may be used as long as the resin particles are not dissolved therein.

The average cell diameter may be controlled by adjustment of the kind and amount of the blowing agent, the foaming temperature and the amount of the cell controlling agent. The apparent density (expansion ratio) may be controlled by adjustment of the kind of the blowing agent, the foaming temperature and the above-described difference in pressure at the time of the foaming. The apparent density of the expanded beads is smaller with an increase of the amount of the blowing agent, the foaming temperature and the pressure difference.

A melt-adhesion preventing agent may be incorporated into the dispersing medium for the purpose of preventing the resin particles dispersed therein from melt-adhering to each other during heating of the dispersion in the closed vessel. Any organic and inorganic material may be used as the melt-adhesion preventing agent, as long as they are insoluble in water, etc. and are not fused when heated. Inorganic materials are generally preferably used.

Examples of the inorganic melt-adhesion preventing agent include powders of kaolin, talc, mica, aluminum oxide, titanium oxide and aluminum hydroxide. The melt-adhesion preventing agent preferably has an average particle diameter of 0.001 to 100 $\mu$m, more preferably 0.001 to 30 $\mu$m and is preferably used in an amount of 0.01 to 10 parts by weight per 100 parts by weight of the resin particles.

A dispersing aid such as an anionic surfactant, e.g. sodium dodecylbenzenesulfonate and sodium oleate, and aluminum sulfate may also be suitably used. The dispersing aid is preferably used in an amount of 0.001 to 5 parts by eight per 100 parts by weight of the resin particles.

The molded article according to the present invention may be produced by a customarily known method by filling the above-described expanded beads in a mold cavity and heating same with steam for molding. Namely, expanded beads are filled in a mold cavity that can be closed but cannot be sealed. Thereafter, steam is fed into the mold cavity to heat and expand the expanded beads. By this, the expanded beads are fusion-bonded to each other, thereby obtaining a molded article having a shape conforming to the shape of the mold cavity. If desired, the expanded beads may be subjected to a pressurizing treatment to increase the inside pressure of the expanded beads to 0.01 to 0.2 MPa(G) in the same manner as that of the two-step expansion.

After the molding of the expanded beads by fusion-bonding thereof has been completed, the molded article obtained is cooled. A water-cooling method may be used. The cooling may be also carried out by a vacuum method in which heat of vaporization of steam is utilized.

In the present invention, the expanded beads may be compressively filled in a mold cavity with a compression ratio of 4 to 25 %, preferably 5 to 20 %, and thereafter subjected to in-mold molding to obtain a desired molded article.

The compression ratio can be controlled by charging the expanded beads in the mold cavity in an amount greater than the inside volume of the mold cavity. When the expanded beads are filled in the mold cavity, the molds are not fully closed to maintain the molds in a slightly opened state for the purpose of facilitating purge of the remaining air from the mold cavity and efficiently filling the expanded beads in the mold cavity. Such a slight opening is called cracking. After the expanded beads have been filled in the mold cavity but before steam is introduced thereinto, the cracking is eventually closed so that the expanded beads are compressed.

The molded article of the present invention preferably has a closed cell content of 75% or more, more preferably 80% or more, still more preferably 82% or more. When the closed cell content is excessively low, it becomes difficult to reduce the apparent density of the molded article and, hence, the mechanical properties of the molded article tends to be deteriorated.

The closed cell content of the molded article is measured as follows. The molded article obtained is allowed to stand, for aging, for 10 days in a thermostatic chamber at 23°C under atmospheric pressure and a relative humidity of 50%. A sample with a size of $25\times25\times20$ mm is cut out from the aged molded article and measured for its closed cell content in the same manner as that for the above-described measurement of the closed cell content of the expanded beads.

EXAMPLES

The present invention will be described below in further detail by way of examples. The present invention is, however, not to be restricted to the examples in any way.

Table 1 shows the kinds and physical properties of PP resins, Table 2 shows the kinds and physical properties of PE resins, Table 3 shows the kinds and physical properties of CB and Table 4 shows the kinds and physical properties of olefin-based elastomers, which were used in Examples and Comparative Examples.

Table 1

| Polypropylene resin | Abbreviation | PP1 |
|---|---|---|
| | Kind of resin | Ethylene-propylene random copolymer |
| | Melting point (°C) | 136 |
| | Ethylene content (% by weight) | 3.6 |
| | Glass transition temperature (°C) | 3 |
| | MFR (g/10min) | 8.2 |

Table 2

| | | PE1 | PE2 | PE3 | PE4 | PE5 | PE6 | PE7 | PE8 | PE9 |
|---|---|---|---|---|---|---|---|---|---|---|
| Polyethylene resin | Abbreviation | LLDPE | HDPE | LLDPE | LLDPE | LLDPE | HDPE | LLDPE | LDPE | LLDPE |
| | Kind of resin | C6 | C6 | C6 | C6 | C6 | – | C4 | – | C4 |
| | Carbon number of Comonomer | 0.91 | 0.95 | 0.91 | 0.88 | 0.91 | 0.96 | 0.92 | 0.92 | 0.93 |
| | Density of resin (g/cm$^3$) | 102 | 131 | 100 | 59 | 96 | 130 | 108 | 121 | 123 |
| | Melting point (°C) | <-70 | <-70 | <-70 | <-70 | <-70 | <-70 | <-70 | <-70 | <-70 |
| | Glass transition temperature (°C) | 2.2 | 0.01 | 4.0 | 4.6 | 26 | 71 | 1.8 | 2.4 | 90 |
| | MFR (g/10min) | | | | | | | | | |

In Table 2, "C4" means that the PE resin contains 1-butene as a comonomer, namely the PE resin is an ethylene-butene copolymer; "C6" means that the PE resin contains 1-hexene as a comonomer, namely the PE resin is an ethylene-hexene copolymer; "-" means that the PE resin does not contain a comonomer, namely the PE resin is an ethylene homopolymer; "LLDPE" means linear low density polyethylene; "HDPE" means high density polyethylene; and "LDPE" means low density polyethylene.

Table 3

| Electrically conductive carbon black | Abbreviation | CB1 | CB2 |
|---|---|---|---|
| | Kind (production method) | Oil furnace black | Acetylene black |
| | Product name | Ketjen Black EC300J | Toka Black #5500 |
| | DBP oil absorption amount ($cm^3$/100g) | 360 | 155 |
| | Particle size (nm) | 40 | 25 |

Table 4

| Olefin-based elastomer | Abbreviation | EO1 |
|---|---|---|
| | Kind of resin | Ethylene-octene copolymerized elastomer |
| | Comonomer | C8 |
| | Density of resin ($g/cm^3$) | 0.87 |
| | Melting point (°C) | 59 |
| | Glass transition temperature (°C) | <-70 |
| | MFR(g/10min) | 10.1 |

In Table 4, "C8" means that the olefin-based elastomer contains 1-octene as a comonomer, namely the elastomer is an ethylene-octene copolymerized elastomer.

Examples 1 to 31 and Comparative Examples 1 to 9

Preparation of CB Master Batches:

MB1:

To a twin screw extruder having an inside diameter of 30 mm, 80 parts of PP1 shown in Table 1 as a PP resin, 15 parts of CB1 shown in Table 3 as CB and 5 parts of EO1 shown in Table 4 as an olefin-based elastomer were fed and melt-kneaded at 200 to 220°C. The kneaded mass was extruded into strands. The strands were cut to obtain CB master batch MB1.

MB2:

To a twin screw extruder having an inside diameter of 30 mm, 85 parts of PP1 shown in Table 1 as a PP resin and 15 parts of CB1 shown in Table 3 as CB were fed and melt-kneaded at 200 to 220°C. The kneaded mass was extruded into strands. The strands were cut to obtain CB master batch MB2.

MB3:

To a twin screw extruder having an inside diameter of 30 mm, 70 parts of PP1 shown in Table 1 as a PP resin and 30 parts of CB2 shown in Table 3 as CB were fed and melt-kneaded at 200 to 220°C. The kneaded mass was extruded into strands. The strands were cut to obtain carbon black master batch MB3.

Preparation of Electrically Conductive Resin Pellets:

The PP resin, PE resin and CB master batch were fed to a twin screw extruder having an inside diameter of 30 mm in amounts so that proportions of the PP resin, PE resin and CB were as shown in Tables 5 and 6, where they were heated, melted and kneaded at 200 to 220°C. The kneaded mass was extruded into strands. The strands were cooled with water and cut with a pelletizer to obtain electrically conductive resin pellets. As the CB master batch, MB1 was used in Examples 1 to 23 and Comparative Examples 1,2,4 and 7, MB3 was used in Examples 24 to 28 and Comparative Examples 5 and 6, and MB2 was used in Examples 29 to 31 and Comparative Examples 3, 8 and 9. In Comparative Examples 8 and 9, the PP resin, PE resin and CB were fed to the twin screw extruder together with EO1 as the olefin-based elastomer in such a proportion as to provide an olefin-based elastomer content as shown in Table 6.

The above resin pellets were fed to an extruder having an inside diameter of 40 mm, melted, kneaded and extruded in the form of strands. The extruded strands were cooled with water and cut with a pelletizer into particles having an average weight of about 2 mg and an L/D ratio of 1.4. Zinc borate as a cell controlling agent was fed to the extruder in an amount so that the content of the zinc borate in the resin particles was 2,000 ppm by weight.

Preparation of Expanded Beads:

The thus obtained resin particles (1 kg) were charged in a 5 L autoclave together with 3 L of water as a dispersing medium, to which 3 g of kaolin as a dispersing agent, 0.04 g of sodium alkylbenzenesulfonate and 0.1 g of aluminum sulfate were added. Carbon dioxide as a blowing agent was then injected into the autoclave in an amount so that the inside pressure of the autoclave was as shown in Tables 4 and 5. The contents were heated with stirring until a foaming temperature was reached and then maintained at the foaming temperature for 15 minutes to adjust the calorific value of the high temperature peak. Thereafter, the contents in the autoclave were released to atmospheric pressure together with water to obtain expanded beads.

Preparation of Two-step Expanded Beads:

In Examples 19 to 21 and Comparative Example 4, the expanded beads obtained above were subjected to a second step expansion treatment to obtain low apparent density expanded beads. Namely, the expanded beads were placed in a pressure resisting closed vessel and pressurized with air so that the inside pressure of the expanded beads was increased by 0.5MPa(G). The treated expanded beads were then taken out of the closed vessel and heated with steam.

Production of Molded Articles:

The above obtained expanded beads were subjected to an in-mold molding process by steam heating to obtain plate-like molded articles. Use was made of a mold having a mold cavity configured to form a flat plate having a length of 250 mm, a width of 200 mm and a thickness of 50 mm. The heating method was as follows. Steam was fed for 5 seconds for preheating in such a state that drain valves of the both molds were maintained in an open state (purging step). Next, steam was fed to perform one-direction flow heating at a pressure lower by 0.04 MPa(G) than that for the full heating. Then, reversed one-direction flow heating was carried out at a pressure lower by 0.02 MPa(G) than that for the full heating. Thereafter, the full heating was carried out at a steam pressure for molding (molding pressure) shown in Tables 5 to 10. The molding pressure was a critical pressure at which a molded article shows the best fusion-bonding property without significant shrinkage and above which the molded article shows either significant shrinkage or reduced fusion-bonding property. After completion of the heating, the pressure was released and the molded product was cooled until its surface pressure due to the expansion force of the molded article reached 0.04MPa(G). The molded product was taken out of the mold cavity and aged in an oven at 80°C for 12 hours, thereby obtaining molded articles having physical properties shown in Tables 5 to 10.

## Table 5

| Example | | | | | 1 | 2 | 3 | 4 |
|---|---|---|---|---|---|---|---|---|
| Resin particles | Base resin | PP resin | | Kind | PP1 | PP1 | PP1 | PP1 |
| | | | | wt% | 94 | 89 | 83 | 66 |
| | | PE resin | | Kind | PE1 | PE1 | PE1 | PE1 |
| | | | | Wt% | 6 | 11 | 17 | 34 |
| | | CB | | Kind | CB1 | CB1 | CB1 | CB1 |
| | | | | Part by weight | 10 | 10 | 10 | 10 |
| | | olefin-based elastomer | | Kind | EO1 | EO1 | EO1 | EO1 |
| | | | | Part by weight | 3 | 3 | 3 | 3 |
| | Surface resistivity | | | $\Omega$ | $1.3 \times 10^2$ | $1.5 \times 10^2$ | $1.4 \times 10^2$ | $1.3 \times 10^2$ |
| Foaming conditions | Blowing agent | | | – | $CO_2$ | $CO_2$ | $CO_2$ | $CO_2$ |
| | Vessel inside pressure | | | MPa(G) | 3.50 | 3.40 | 3.50 | 3.45 |
| | Foaming temperature | | | °C | 147.0 | 147.0 | 147.0 | 147.0 |
| | Two-step expansion | | | – | no | no | no | no |
| Expanded beads | Apparent density | | | kg/m³ | 67 | 67 | 67 | 78 |
| | Average cell diameter | | | μm | 125 | 111 | 100 | 115 |
| | High temperature peak calorific value | | | J/g | 12.1 | 9.7 | 9.7 | 7.9 |
| Molding conditions | Applied inside pressure | | | MPa(G) | — | — | — | — |
| | Molding pressure | | | MPa(G) | 0.24 | 0.24 | 0.24 | 0.18 |
| Molded article | Fusion bonding property | | | – | O | O | O | O |
| | Apparent density | | | kg/m³ | 47 | 45 | 45 | 52 |
| | Compresisive stress at 50% strain | | | kPa | 351 | 401 | 405 | 229 |
| | Closed cell content | | | % | 85 | 85 | 86 | 84 |
| | Surface resistivity *1 | | | $\Omega$ | $3.8 \times 10^7$ | $3.5 \times 10^6$ | $2.9 \times 10^5$ | $1.2 \times 10^5$ |
| | Surface resistivity *2 | | | $\Omega$ | $2.1 \times 10^7$ | $2.8 \times 10^6$ | $2.4 \times 10^5$ | $1.3 \times 10^5$ |
| | Charge decay *1 | | | – | O | O | O | O |
| | Charge decay *2 | | | – | O | O | O | O |

*1: Measurement results at 23°C under 10% relative humidity

*2: Measurement results at 23°C under 50% relative humidity

## Table 6

| | | Unit | 5 | 6 | 7 | 8 | 9 | 10 | 11 | 12 |
|---|---|---|---|---|---|---|---|---|---|---|
| **Resin particles** | | Example | | | | | | | | |
| Base resin — PP resin | Kind | | PP1 | PP1 | PP1 | PP1 | PP1 | PP1 | PP1 | PP1 |
| | | wt% | 94 | 94 | 94 | 94 | 94 | 94 | 94 | 94 |
| Base resin — PE resin | Kind | | PE2 | PE3 | PE4 | PE5 | PE6 | PE7 | PE8 | PE9 |
| | | Wt% | 6 | 6 | 6 | 6 | 6 | 6 | 6 | 6 |
| CB | Kind | | CB1 | CB1 | CB1 | CB1 | CB1 | CB1 | CB1 | CB1 |
| | Part by weight | | 10 | 10 | 10 | 10 | 10 | 10 | 10 | 10 |
| olefin-based elastomer | Kind | | EO1 | EO1 | EO1 | EO1 | EO1 | EO1 | EO1 | EO1 |
| | Part by weight | | 3 | 3 | 3 | 3 | 3 | 3 | 3 | 3 |
| Surface resistivity | | $\Omega$ | $9.4\times10^{1}$ | $1.2\times10^{2}$ | $1.5\times10^{2}$ | $1.0\times10^{2}$ | $1.0\times10^{2}$ | $1.0\times10^{2}$ | $1.1\times10^{2}$ | $1.2\times10^{2}$ |
| **Foaming conditions** | | | | | | | | | | |
| Blowing agent | | – | $CO_2$ | $CO_2$ | $CO2$ | $CO_2$ | $CO_2$ | $CO_2$ | $CO_2$ | $CO_2$ |
| Vessel inside pressure | | MPa(G) | 3.40 | 3.50 | 3.40 | 3.60 | 3.50 | 0.50 | 0.50 | 3.80 |
| Foaming temperature | | °C | 147.0 | 147.0 | 147.0 | 147.0 | 147.0 | 147.0 | 147.0 | 144.0 |
| Two-step expansion | | – | no | no | no | no | no | no | no | no |
| **Expanded beads** | | | | | | | | | | |
| Apparent density | | kg/m3 | 70 | 70 | 61 | 66 | 63 | 63 | 61 | 65 |
| Average cell diameter | | μm | 100 | 115 | 125 | 118 | 100 | 115 | 114 | 124 |
| High temperature peak calorific value | | J/g | 7.5 | 10.8 | 17.5 | 10.9 | 10.8 | 11.5 | 11.6 | 14.1 |
| **Molding conditions** | | | | | | | | | | |
| Applied inside pressure | | MPa(G) | – | – | – | – | – | – | – | – |
| Molding pressure | | MPa(G) | 0.22 | 0.26 | 0.28 | 0.26 | 0.24 | 0.26 | 0.24 | 0.32 |
| Fusion bonding property | | – | O | O | O | O | O | O | O | O |
| **Molded article** | | | | | | | | | | |
| Apparent density | | kg/m3 | 44 | 46 | 50 | 45 | 46 | 46 | 46 | 43 |
| Compressive stress at 50% strain | | kPa | 305 | 352 | 431 | 372 | 456 | 381 | 393 | 402 |
| Closed cell content | | % | 86 | 85 | 86 | 85 | 84 | 85 | 85 | 86 |
| Surface resistivity *1 | | $\Omega$ | $1.2\times10^{9}$ | $2.8\times10^{7}$ | $5.5\times10^{6}$ | $3.3\times10^{6}$ | $1.3\times10^{6}$ | $1.5\times10^{7}$ | $1.3\times10^{7}$ | $2.7\times10^{6}$ |
| Surface resistivity *2 | | $\Omega$ | $1.3\times10^{9}$ | $3.0\times10^{7}$ | $6.3\times10^{6}$ | $3.2\times10^{6}$ | $1.4\times10^{6}$ | $1.4\times10^{7}$ | $1.8\times10^{7}$ | $2.5\times10^{6}$ |
| Charge decay *1 | | – | O | O | O | O | O | O | O | O |
| Charge decay *2 | | – | O | O | O | O | O | O | O | O |

*1: Measurement results at 23°C under 10% relative humidity

*2: Measurement results at 23°C under 50% relative humidity

Table 7

| | | | | Example | 13 | 14 | 15 | 16 |
|---|---|---|---|---|---|---|---|---|
| Resin particles | Base resin | PP resin | | Kind | PP1 | PP1 | PP1 | PP1 |
| | | | | wt% | 83 | 99 | 89 | 83 |
| | | PE resin | | Kind | PE2 | PE9 | PE9 | PE9 |
| | | | | Wt% | 17 | 1 | 11 | 17 |
| | | CB | | Kind | CB1 | CB1 | CB1 | CB1 |
| | | | | Part by weight | 10 | 10 | 10 | 10 |
| | | olefin-based elastomer | | Kind | EO1 | EO1 | EO1 | EO1 |
| | | | | Part by weight | 3 | 3 | 3 | 3 |
| | | Surface resistivity | | Ω | $1.3 \times 10^2$ | $1.1 \times 10^2$ | $1.2 \times 10^2$ | $1.2 \times 10^2$ |
| Foaming conditions | | Blowing agent | | – | $CO_2$ | $CO_2$ | $CO_2$ | $CO_2$ |
| | | Vessel inside pressure | | MPa(G) | 3.40 | 3.40 | 3.50 | 3.45 |
| | | Foaming temperature | | °C | 147.0 | 147.0 | 147.0 | 147.0 |
| | | Two-step expansion | | – | no | no | no | no |
| Expanded beads | | Apparent density | | kg/m3 | 67 | 69 | 73 | 64 |
| | | Average cell diameter | | μ m | 111 | 114 | 118 | 142 |
| | | High temperature peak calorific value | | J/g | 5.9 | 11.0 | 10.8 | 10.6 |
| Molding conditions | | Applied inside pressure | | MPa(G) | — | — | — | — |
| | | Molding pressure | | MPa(G) | 0.16 | 0.20 | 0.26 | 0.24 |
| Molded article | | Fusion bonding property | | – | ○ | ○ | ○ | ○ |
| | | Apparent density | | kg/m3 | 41 | 42 | 45 | 46 |
| | | Compresisive stress at 50% strain | | kPa | 324 | 382 | 385 | 382 |
| | | Closed cell content | | % | 85 | 86 | 86 | 84 |
| | | Surface resistivity *1 | | Ω | $6.6 \times 10^8$ | $3.4 \times 10^6$ | $2.3 \times 10^6$ | $2.4 \times 10^6$ |
| | | Surface resistivity *2 | | Ω | $5.3 \times 10^8$ | $3.1 \times 10^6$ | $1.9 \times 10^6$ | $1.8 \times 10^6$ |
| | | Charge decay *1 | | – | ○ | ○ | ○ | ○ |
| | | Charge decay *2 | | – | ○ | ○ | ○ | ○ |

*1: Measurement results at 23°C under 10% relative humidity

*2: Measurement results at 23°C under 50% relative humidity

Table 8

| | | | | Example | 17 | 18 | 19 | 20 | 21 | 22 | 23 |
|---|---|---|---|---|---|---|---|---|---|---|---|
| Resin particles | Base resin | PP resin | | Kind | PP1 | PP1 | PP1 | PP1 | PP1 | PP1 | PP1 |
| | | | | wt% | 97 | 97 | 97 | 89 | 89 | 90 | 89 |
| | | PE resin | | Kind | PE9 | PE9 | PE9 | PE1 | PE1 | PE9 | PE9 |
| | | | | Wt% | 3 | 3 | 3 | 11 | 11 | 10 | 11 |
| | | CB | | Kind | CB1 | CB1 | CB1 | CB1 | CB1 | CB1 | CB1 |
| | | | | Part by weight | 10 | 10 | 10 | 10 | 10 | 9 | 12 |
| | | olefin-based elastomer | | Kind | EO1 | EO1 | EO1 | EO1 | EO1 | EO1 | EO1 |
| | | | | Part by weight | 3 | 3 | 3 | 3 | 3 | 3 | 3 |
| | Surface resistivity | | | $\Omega$ | $1.1 \times 10^2$ | $1.1 \times 10^2$ | $1.1 \times 10^2$ | $1.4 \times 10^2$ | $1.4 \times 10^2$ | $1.2 \times 10^2$ | $1.2 \times 10^2$ |
| Foaming conditions | Blowing agent | | | – | $CO_2$ | $CO_2$ | $CO_2$ | $CO_2$ | $CO_2$ | $CO_2$ | $CO_2$ |
| | Vessel inside pressure | | | MPa(G) | 3.55 | 3.40 | 3.50 | 3.40 | 3.40 | 3.40 | 3.55 |
| | Foaming temperature | | | °C | 145.0 | 147.0 | 147.0 | 147.0 | 147.0 | 147.0 | 147.0 |
| | Two-step expansion | | | – | no | no | yes | yes | yes | no | no |
| Expanded beads | Apparent density | | | kg/m3 | 107 | 61 | 48 | 34 | 18 | 64 | 70 |
| | Average cell diameter | | | μ m | 105 | 110 | 185 | 184 | 184 | 124 | 135 |
| | High temperature peak calorific value | | | J/g | 13.7 | 10.8 | 12.5 | 11.0 | 11.0 | 11.0 | 10.8 |
| Molding conditions | Applied inside pressure | | | MPa(G) | — | — | 0.12 | 0.12 | 0.15 | — | — |
| | Molding pressure | | | MPa(G) | 0.40 | 0.16 | 0.24 | 0.24 | 0.24 | 0.24 | 0.26 |
| Molded article | Fusion bonding property | | | – | ○ | ○ | ○ | ○ | ○ | ○ | ○ |
| | Apparent density | | | kg/m3 | 53.6 | 39.5 | 28.9 | 18.8 | 12.1 | 47.4 | 53.3 |
| | Compresisive stress at 50% strain | | | kPa | 452 | 321 | 296 | 181 | 166 | 405 | 465 |
| | Closed cell content | | | % | 86 | 85 | 84 | 85 | 85 | 85 | 85 |
| | Surface resistivity *1 | | | $\Omega$ | $1.9 \times 10^6$ | $2.5 \times 10^6$ | $2.8 \times 10^7$ | $4.4 \times 10^7$ | $2.3 \times 10^8$ | $4.9 \times 10^6$ | $3.9 \times 10^5$ |
| | Surface resistivity *2 | | | $\Omega$ | $2.0 \times 10^6$ | $2.4 \times 10^6$ | $2.6 \times 10^7$ | $5.1 \times 10^7$ | $4.2 \times 10^8$ | $3.9 \times 10^6$ | $4.4 \times 10^5$ |
| | Charge decay *1 | | | – | ○ | ○ | ○ | ○ | ○ | ○ | ○ |
| | Charge decay *2 | | | – | ○ | ○ | ○ | ○ | ○ | ○ | ○ |

*1: Measurement results at 23°C under 10% relative humidity

*2: Measurement results at 23°C under 50% relative humidity

Table 9

| | | | | Example | 24 | 25 | 26 | 27 | 28 | 29 | 30 | 31 |
|---|---|---|---|---|---|---|---|---|---|---|---|---|
| Resin particles | Formulation of raw material | PP resin | Kind | | PP1 | PP1 | PP1 | PP1 | PP1 | PP1 | PP1 | PP1 |
| | | | wt% | | 94 | 89 | 83 | 89 | 89 | 99 | 97 | 94 |
| | | PE resin | Kind | | PE1 | PE1 | PE1 | PE1 | PE1 | PE9 | PE9 | PE9 |
| | | | Wt% | | 6 | 11 | 17 | 11 | 11 | 1 | 3 | 6 |
| | | CB | Kind | | CB2 | CB2 | CB2 | CB2 | CB2 | CB1 | CB1 | CB1 |
| | | | Part by weight | | 25 | 25 | 25 | 24 | 26 | 10 | 10 | 10 |
| | | olefin-based elastomer | Kind | | — | — | — | — | — | — | — | — |
| | | | Part by weight | | — | — | — | — | — | — | — | — |
| | Surface resistivity | | | $\Omega$ | $1.3 \times 10^2$ | $1.3 \times 10^2$ | $1.3 \times 10^2$ | $1.3 \times 10^2$ | $1.4 \times 10^2$ | $1.5 \times 10^2$ | $1.5 \times 10^2$ | $1.5 \times 10^2$ |
| Foaming conditions | Blowing agent | | | – | $CO_2$ | $CO_2$ | $CO_2$ | $CO_2$ | $CO_2$ | $CO_2$ | $CO_2$ | $CO_2$ |
| | Vessel inside pressure | | | MPa(G) | 3.50 | 3.55 | 3.50 | 3.60 | 3.60 | 3.50 | 3.40 | 3.40 |
| | Foaming temperature | | | °C | 147.0 | 147.0 | 147.0 | 149.0 | 149.0 | 145.0 | 147.0 | 147.0 |
| | Two-step expansion | | | – | no | no | no | no | no | no | no | no |
| Expanded beads | Apparent density | | | kg/m3 | 99 | 67 | 80 | 64 | 64 | 72 | 41 | 70 |
| | Average cell diameter | | | $\mu$ m | 51 | 58 | 62 | 44 | 43 | 124 | 118 | 123 |
| | High temperature peak calorific value | | | J/g | 8.9 | 5.1 | 8.9 | 5.4 | 5.6 | 10.3 | 11.3 | 11.4 |
| Molding conditions | Applied inside pressure | | | MPa(G) | — | — | — | — | — | — | — | — |
| | Molding pressure | | | MPa(G) | 0.24 | 0.22 | 0.26 | 0.20 | 0.22 | 2.32 | 0.20 | 0.16 |
| Molded article | Fusion bonding property | | | – | O | O | O | O | O | O | O | O |
| | Apparent density | | | kg/m3 | 47.6 | 46.9 | 46.6 | 42.9 | 46.9 | 41.5 | 43.5 | 43.1 |
| | Compresisive stress at 50% strain | | | kPa | 335 | 375 | 279 | 221 | 218 | 382 | 384 | 375 |
| | Closed cell content | | | % | 83 | 83 | 83 | 84 | 84 | 86 | 86 | 86 |
| | Surface resistivity *1 | | | $\Omega$ | $3.9 \times 10^6$ | $5.9 \times 10^6$ | $7.9 \times 10^6$ | $9.8 \times 10^8$ | $1.4 \times 10^6$ | $2.8 \times 10^7$ | $3.1 \times 10^6$ | $2.5 \times 10^7$ |
| | Surface resistivity *2 | | | $\Omega$ | $4.6 \times 10^6$ | $5.4 \times 10^6$ | $8.5 \times 10^6$ | $1.0 \times 10^9$ | $1.8 \times 10^6$ | $2.6 \times 10^7$ | $3.5 \times 10^6$ | $2.3 \times 10^7$ |
| | Charge decay *1 | | | – | O | O | O | O | O | O | O | O |
| | Charge decay *2 | | | – | O | O | O | O | O | O | O | O |

*1: Measurement results at 23°C under 10% relative humidity    *2: Measurement results at 23°C under 50% relative humidity

Table 10

| | | | 1 | 2 | 3 | 4 | 5 | 6 | 7 | 8 | 9 |
|---|---|---|---|---|---|---|---|---|---|---|---|
| | | Comparative Example | | | | | | | | | |
| Formulation of raw material | Resin particles | PP resin Kind | PP1 | PP1 | PP1 | PP1 | PP1 | PP1 | PP1 | PP1 | PP1 |
| | | PP resin wt% | 100 | 100 | 100 | 100 | 100 | 100 | 54 | 100 | 100 |
| | | PE resin Kind | – | – | – | – | – | – | PE1 | – | – |
| | | PE resin Wt% | – | – | – | – | – | – | 46 | – | – |
| | | CB Kind | CB1 | CB1 | CB1 | CB1 | CB2 | CB2 | CB1 | CB1 | CB1 |
| | | CB Part by weight | 10 | 5 | 10 | 10 | 25 | 20 | 10 | 10 | 10 |
| | | olefin-based elastomer Kind | EO1 | EO1 | – | EO1 | – | – | EO1 | EO1 | EO1 |
| | | olefin-based elastomer Part by weight | 3 | 3 | – | 3 | – | – | 3 | 5 | 15 |
| | | Surface resistivity Ω | $6.9 \times 10^1$ | $8.5 \times 10^5$ | $4.7 \times 10^1$ | $6.9 \times 10^1$ | $6.0 \times 10^1$ | $6.9 \times 10^0$ | $6.9 \times 10^1$ | $1.5 \times 10^2$ | $1.5 \times 10^2$ |
| Foaming conditions | | Blowing agent – | $CO_2$ | $CO_2$ | $CO2$ | $CO_2$ | $CO_2$ | $CO_2$ | $CO_2$ | $CO_2$ | $CO_2$ |
| | | Vessel inside pressure MPa(G) | 2.55 | 2.95 | 2.55 | 3.50 | 2.55 | 4.70 | 2.55 | 3.50 | 3.40 |
| | | Foaming temperature °C | 147.5 | 148.0 | 147.5 | 146.0 | 147.5 | 145.5 | 147.5 | 148.0 | 148.0 |
| | | Two-step expansion – | no | no | no | yes | no | no | no | no | no |
| Expanded beads | | Apparent density kg/m3 | 70 | 62 | 70 | 33 | 70 | 75 | 70 | 61 | 61 |
| | | Average cell diameter μm | 121 | 133 | 124 | 152 | 96 | 103 | 119 | 138.2 | 110.4 |
| | | High temperature peak calorific value J/g | 11.5 | 10.8 | 11.5 | 10.2 | 13.5 | 10.6 | 13.5 | 9.8 | 7.0 |
| Molding conditions | | Applied inside pressure MPa(G) | – | – | – | 0.12 | – | – | – | – | – |
| | | Molding pressure MPa(G) | 0.24 | 0.18 | 0.30 | 0.34 | 0.32 | 0.32 | 0.30 | 0.26 | 0.16 |
| Molded article | | Fusion bonding property – | ○ | ○ | ○ | ○ | ○ | ○ | ○ | ○ | ○ |
| | | Apparent density kg/m3 | 45 | 36 | 52 | 18 | 48 | 55 | 47 | 56 | 43 |
| | | Compressive stress at 50% strain kPa | 361 | 245 | 427 | 186 | 312 | 502 | 218 | 479 | 296 |
| | | Closed cell content % | 85 | 85 | 86 | 86 | 84 | 86 | 83 | 84 | 84 |
| | | Surface resistivity *1 Ω | $4.7 \times 10^4$ | $1.0 \times 10^{15}<$ | $1.8 \times 10^3$ | $1.0 \times 10^{15}<$ | $2.3 \times 10^4$ | $1.0 \times 10^{15}<$ | $1.0 \times 10^{15}<$ | $4.4 \times 10^4$ | $3.2 \times 10^4$ |
| | | Surface resistivity *2 Ω | $4.1 \times 10^4$ | $1.0 \times 10^{15}<$ | $2.0 \times 10^3$ | $1.0 \times 10^{15}<$ | $2.5 \times 10^4$ | $1.0 \times 10^{15}<$ | $1.0 \times 10^{15}<$ | $3.5 \times 10^4$ | $2.8 \times 10^4$ |
| | | Charge decay *1 – | ○ | × | ○ | × | ○ | × | × | ○ | ○ |
| | | Charge decay *2 – | ○ | × | ○ | × | ○ | × | × | ○ | ○ |

*1: Measurement results at 23°C under 10% relative humidity

*2: Measurement results at 23°C under 50% relative humidity

The expanded beads and molded articles obtained were measured for their physical properties by the following methods.

Surface Resistivity:

The surface resistivity of the molded articles was measured as follows. Each molded article was aged at 23°C and a relative humidity of 10% (Environment Condition 1) for 1 day immediately after the production thereof or aged at 23°C and a relative humidity of 50% (Environment Condition 2) for 1 day immediately after the production thereof. The aged molded articles was thereafter measured for its surface resistivity according to JIS C2170(2004) at 23°C and a relative humidity of 10% in the case of the molded article aged under Environment Condition 1 and at 23°C and a relative humidity of 50% in the case of the molded article aged under Environment Condition 2.
Namely, a test piece having a length of 100 mm, a width of 100 mm and a thickness equal to that of the molded article was cut out from each of the aged molded articles. The surface resistivity was measured on the skin surface of each test piece using a resistivity meter (HIRESTA MCP-HT450, manufactured by Mitsubishi Chemical Analytech Co., Ltd.). When the measured value was less than $1\times10^4$ $\Omega$, surface resistivity was again measured on the skin surface using resistivity meter (LORESTA MCP-HT610, manufactured by Mitsubishi Chemical Analytech Co., Ltd.).

Charge Decay:

The charge decay time of the molded articles was measured as follows. Each molded article was aged at 23°C and a relative humidity of 10% (Environment Condition 1) for 1 day immediately after the production thereof or aged at 23°C and a relative humidity of 50% (Environment Condition 2) for 1 day immediately after the production thereof. The aged molded article was thereafter measured for its charge decay time at 23°C and a relative humidity of 10% in the case of the molded article aged under Environment Condition 1 and at 23°C and a relative humidity of 50% in the case of the molded article aged under Environment Condition 2.
Namely, a test piece having a length of 150 mm, a width of 150 mm and a thickness of 10 mm was cut out from the molded article such that one of the surfaces with $150\times150$ mm area was the skin surface of the molded article. The charge decay was measured using a measuring device (Charged Plate Monitor Model 159HH, manufactured by Trek Japan Co., Ltd.). Thus, each of the test pieces was placed on a measurement plate of the device and charged with a voltage of 1,300V. Thereafter, a center part of the test piece on the side opposite from the measurement plate was grounded using a copper wire. The time required for the voltage to decay from 1,000V to 100V was measured. When the decay time was 2 seconds or shorter, the charge decay was evaluated as being good (o). Otherwise, the charge decay was evaluated as being no good ($\times$).

Observation of Morphology of Expanded Beads:

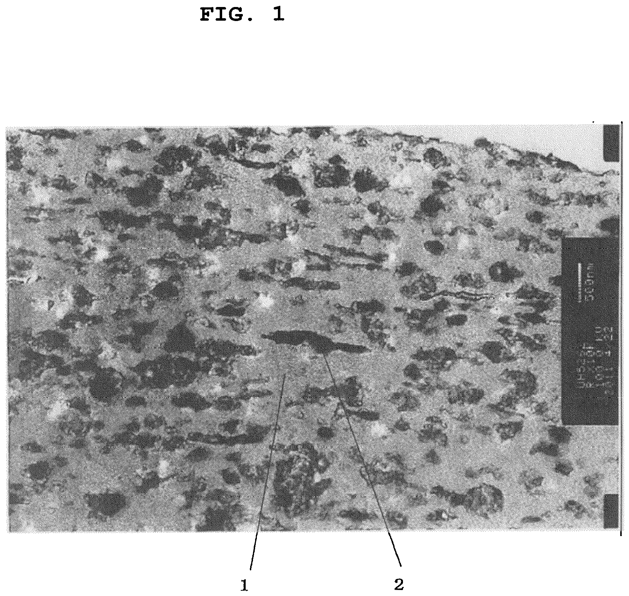

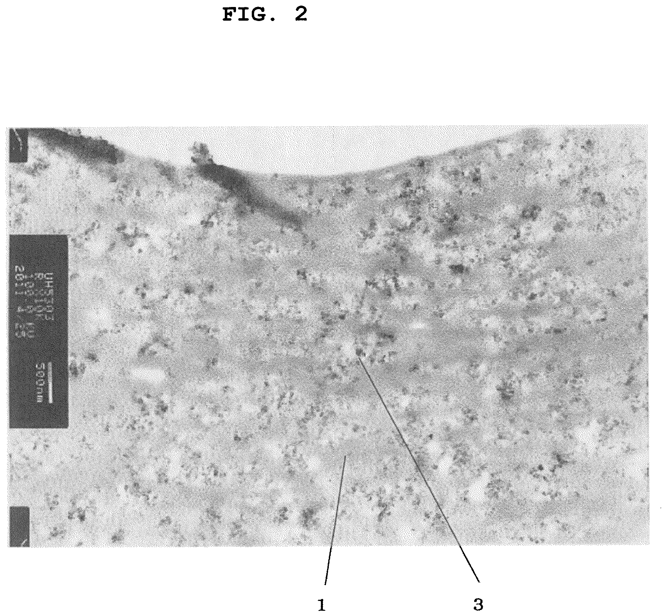

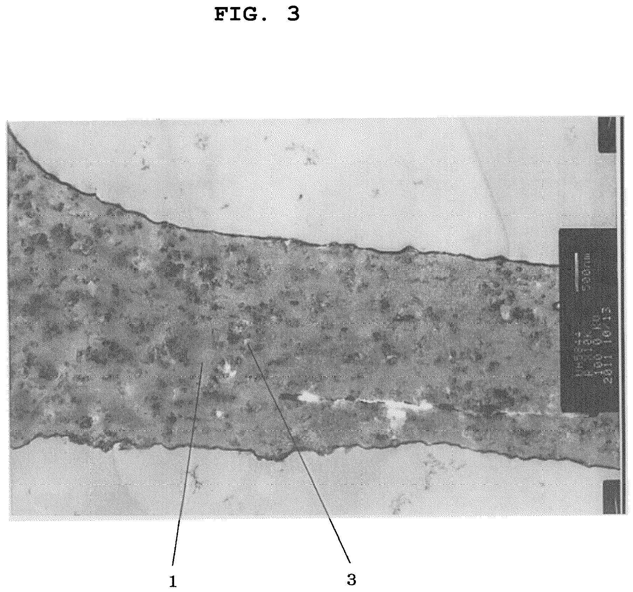

A dispersion state of the PE resin in the PP resin continuous phase was investigated by the following method. A sample for observation was cut out from a surface of the expanded bead, embedded in an epoxy resin and stained with ruthenium tetraoxide. An ultrathin slice was then cut out using an ultramicrotome. The slice was placed on a grid and measured by a transmission electron microscope (JEM1010 manufactured by JEOL Ltd.) at 20,000 fold magnification to observe the morphology of the cross-section of the cells of the expanded bead. FIG. 1 is a microphotograph of the expanded bead obtained in Example 3 and FIG. 3 is a microphotograph of the expanded bead obtained in Comparative Example 1. From FIG. 1, it is seen that the PE resin 2 (which is stained and seen dark in the microphotograph) is dispersed in the polypropylene resin continuous phase 1. In the case of the expanded bead whose base resin is composed only of the PP resin, on the other hand, CB3 is dispersed in the PP resin 1 in clusters as will be seen from FIG. 3.
For the purpose of confirming the dispersion state of CB, the slice piece stained with ruthenium tetraoxide was discolored and measured by a transmission electron microscope (JEM1010 manufactured by JEOL Ltd.) at 20,000 fold magnification. FIG. 2 is a microphotograph of the expanded bead obtained in Example 3. From FIG. 2, it is seen that, in the expanded bead whose base resin is constituted of a PP resin continuous phase and PE resin dispersed phases, CB 3 is present in the domains having nearly the same size as that of the dispersed phases 2 (FIG. 1).
Observation of morphology has revealed that, in the expanded beads of Examples 1 to 31, the PP resin forms a continuous phase (matrix) while the PE resin forms dispersed phases (domains) with the CB being distributed unevenly to the dispersed phases side.

Fusion Bonding Property:

Fusion bonding property was measured and evaluated by the following method. The molded article was bent and ruptured. The ruptured cross section was observed to count a number (C1) of the expanded beads present on the surface and a number (C2) of the expanded beads which underwent material failure. The percentage (C2/C1×100) was calculated as a material failure rate. The above procedure was repeated five times in total using different samples to determine respective percentage material failure rates. The arithmetic mean of the five material failure rates represents the fusion bonding property. When the material failure rate was 80% or higher, the fusion bonding property was evaluated as being good (indicated as "o" in Tables 5 to 10). Otherwise, the fusion bonding property was evaluated as being no good ((indicated as "×" in Tables 5 to 10).

Apparent Density of Expanded Beads:

A group of expanded beads (about 500 $cm^3$), which had been allowed to stand at 23°C, a relative humidity of 50% under 1 atm for 2 days, were immersed in water contained in a 1 liter measuring cylinder using a wire net. From the rise of the water level in the measuring cylinder, a volume (V ($cm^3$)) of the group of the expanded beads was measured. The apparent density ($kg/m^3$) of the expanded beads was determined by dividing the weight (W) of the group of the expanded beads by the volume thereof (W/V), followed by unit conversion into [$kg/m^3$].

Apparent density of Molded Article:

The apparent density [$kg/m^3$] of the molded articles was calculated by dividing the weight thereof by the volume thereof which was determined from the outer dimensions thereof.

Compressive Stress:

According to JIS K7220(2006), compression stress at 50% strain of the molded article was measured.

Closed Cell Content:

Closed cell content of the molded article was measured by the method described previously.

Explanation of Reference Numerals:

    1: Polypropylene resin
    2: Polyethylene resin
    3: Electrically conductive carbon black

**Claims**

**1.** An electrostatic dissipative, polypropylene-based resin expanded bead that is constituted of a base resin containing a polypropylene resin as a major component and that contains electrically conductive carbon black, wherein the base resin comprises the polypropylene resin which forms a continuous phase and a polyethylene resin which forms dispersed phases dispersed in the continuous phase, the carbon black is Ketjen black or acetylene black and is unevenly distributed to the dispersed phases side, the polyethylene resin being an ethylene homopolymer or a copolymer of ethylene and $C_4$ to $C_6$ $\alpha$-olefin, the polypropylene resin and polyethylene resin are present in such a proportion as to provide a weight ratio of the polypropylene resin to the polyethylene resin of 98:2 to 85:15, the expanded bead has an apparent density of 10 to 120 $kg/m^3$, the Ketjen black is present in an amount of 6 to 14 parts by weight per 100 parts by weight of the based resin and the acetylene black is present in an amount of 23 to 27 parts by weight per 100 parts by weight of the base resin, and wherein the carbon black has an average particle size of 10 to 80 nm.

**2.** The polypropylene-based resin expanded bead according to claim 1, wherein the ethylene resin is a linear low density polyethylene and/or a high density polyethylene.

3. A molded article comprising the expanded beads according to any one of claims 1 to 2 which are integrally fusion-bonded together, said molded article having a surface resistance of $1\times10^5$ to $1\times10^{10}$ $\Omega$.

4. A method for preparing polypropylene-based resin expanded beads, comprising melting and kneading, in the presence of electrically conductive carbon black being selected from Ketjen black or acetylene black, a base resin containing 98 to 85% by weight of a polypropylene resin and 2 to 15% by weight of at least one polyethylene resin selected from ethylene homopolymers and copolymers of ethylene and $C_4$ to $C_6$ $\alpha$-olefin, forming the resulting kneaded product into resin particles, and foaming and expanding the resin particles to produce the expanded beads having an apparent density of 10 to 120 kg/m$^3$, wherein if the electrically conductive carbon black is Ketjen black it is present in an amount of 6 to 14 parts by weight per 100 parts by weight of the based resin and if the electrically conductive carbon black is acetylene black it is present in an amount of 23 to 27 parts by weight per 100 parts by weight of the base resin, and wherein the carbon black has an average particle size of 10 to 80 nm.

5. The method for preparing polypropylene-based resin expanded beads according to claim 4, wherein the polyethylene resin is a linear low density polyethylene and/or a high density polyethylene.

6. The method for preparing polypropylene-based resin expanded beads according to claim 4 or 5, wherein the resin particles are constituted of the polypropylene resin which forms a continuous phase and the polyethylene resin which forms a dispersed phases dispersed in the continuous phase.

**Patentansprüche**

1. Elektrostatisch dissipatives expandiertes Partikel aus auf Polypropylenbasiertem Harz, das aus einem Basisharz besteht, welches Polypropylenharz als Hauptbestandteil enthält und das elektrisch leitfähigen Ruß enthält, wobei das Basisharz das Polypropylenharz umfasst, das eine kontinuierliche Phase bildet und ein Polyethylenharz, welches in der kontinuierlichen Phase dispergierte Phasen bildet, wobei der Ruß Ketjenruß oder Acetylenruß ist und ungleichmäßig zur Seite der dispergierten Phasen verteilt ist, das Polyethylenharz ein Ethylenhomopolymer oder ein Copolymer aus Ethylen und $C_4$ bis $C_6$ $\alpha$-Olefin ist, das Polypropylenharz und Polyethylenharz in einem solchen Verhältnis vorliegen, dass ein Gewichtsverhältnis des Polypropylenharzes zum Polyethylenharz von 98:2 bis 85:15 vorliegt, das expandierte Partikel eine Schüttdichte von 10 bis 120 kg/m$^3$ hat, der Ketjenruß in einer Menge von 6 bis 14 Gewichtsteilen pro 100 Gewichtsteilen des Basisharzes vorliegt und der Acetylenruß in einer Menge von 23 bis 27 Gewichtsteilen pro 100 Gewichtsteilen des Basisharzes, und wobei der Ruß eine mittlere Partikelgröße von 10 bis 80 nm aufweist.

2. Das expandierte Partikel aus Polypropylenbasiertem Harz nach Anspruch 1, **dadurch gekennzeichnet, dass** das Ethylenharz ein lineares Polyethylen niedriger Dichte und/oder ein hochdichtes Polyethylen ist.

3. Ein Formgegenstand aufweisend die expandierten Partikel nach einem der Ansprüche 1 oder 2, die integral miteinander schmelzverbunden sind, wobei der Formgegenstand einen Oberflächenwiderstand von $1x10^5$ bis $1 \times 10^{10}$ $\Omega$ hat.

4. Verfahren zur Herstellung expandierter Partikel aus auf Polypropylenbasiertem Harz, umfassend das Schmelzen und Kneten in Gegenwart eines elektrisch leitfähigen Rußes, ausgewählt aus Ketjenruß oder Acetylenruß, eines Basisharzes enthaltend 98 bis 85 Gewichtsprozent eines Polypropylenharzes und 2 bis 15 Gewichtsprozent wenigstens eines Polyethylenharzes ausgewählt aus Ethylenhomopolymeren und Copolymeren aus Ethylen und $C_4$ bis $C_6$ $\alpha$-Olefin, das Formen des resultierenden gekneteten Produkts zu Harzpartikeln, und das Schäumen und Expandieren der Harzpartikel zur Herstellung der expandierten Partikel mit einer Schüttdichte von 10 bis 120 kg/m$^3$, wobei falls der elektrisch leitfähige Ruß Ketjenruß ist, dieser in einer Menge von 6 bis 14 Gewichtsteilen pro 100 Gewichtsteilen Basisharz vorliegt und falls der elektrisch leitfähige Ruß Acetylenruß ist, dieser in einer Menge von 23 bis 27 Gewichtsteilen pro 100 Gewichtsteilen Basisharz vorliegt, und wobei der Ruß eine mittlere Partikelgröße von 10 bis 80 nm hat.

5. Verfahren zur Herstellung expandierter Partikel aus Polypropylenbasiertem Harz nach Anspruch 4, wobei das Polyethylenharz ein lineares Polyethylen niedriger Dichte und/oder ein hochdichtes Polyethylen ist.

6. Verfahren zur Herstellung expandierter Partikel aus Polypropylenbasiertem Harz nach Anspruch 4 oder 5, wobei die Harzpartikel aus Polypropylenharz bestehen, welches eine kontinuierliche Phase bildet, und dem Polyethylenharz, welches dispergierte Phasen bildet, die in der kontinuierlichen Phase dispergiert sind.

**Revendications**

1. Bille expansée de résine à base polypropylène, à dissipation électrostatique, qui est constituée d'une résine de base contenant une résine de polypropylène comme composant principal et qui contient du noir de carbone électriquement conducteur,
   dans laquelle la résine de base comprend la résine de polypropylène qui forme une phase continue et une résine de polyéthylène qui forme des phases dispersées, dispersées dans la phase continue,
   le noir de carbone est du noir de Ketjen ou du noir d'acétylène et est distribué de façon non uniforme au côté des phases dispersées,
   la résine de polyéthylène étant un homopolymère d'éthylène ou un copolymère d'éthylène et une $\alpha$-oléfine en $C_4$ à $C_6$,
   la résine de polypropylène et la résine de polyéthylène sont présentes en une proportion permettant d'obtenir un rapport en poids de la résine de polypropylène à la résine de polyéthylène de 98:2 à 85:15,
   la bille expansée a une densité apparente de 10 à 120 kg/m$^3$,
   le noir de Ketjen est présent en une quantité de 6 à 14 parties en poids pour 100 parties en poids de la résine de base et le noir d'acétylène est présent en une quantité de 23 à 27 parties en poids pour 100 parties en poids de la résine de base, et
   dans laquelle le noir de carbone a une taille moyenne de particule de 10 à 80 nm.

2. Bille expansée de résine à base polypropylène selon la revendication 1, dans laquelle la résine d'éthylène est un polyéthylène linéaire à basse densité et/ou un polyéthylène à haute densité.

3. Article moulé comprenant les billes expansées selon l'une quelconque des revendications 1 à 2, qui sont intégralement liées les unes aux autres par fusion, ledit article moulé ayant une résistance de surface de 1 x 10$^5$ à 1 x 10$^{16}$ $\Omega$.

4. Procédé de préparation de billes expansées de résine à base de polypropylène, comprenant la fonte et le pétrissage, en présence de noir de carbone électriquement conducteur qui est choisi parmi le noir de Ketjen ou le noir d'acétylène, d'une résine de base contenant 98 à 85 % en poids d'une résine de polypropylène et 2 à 15 % en poids d'au moins une résine de polyéthylène choisie parmi des homopolymères d'éthylène et des copolymères d'éthylène et une $\alpha$-oléfine en $C_4$ à $C_6$, formant le produit pétri résultant en particules de résine, et le moussage et l'expansion des particules de résine pour produire les billes expansées ayant une densité apparente de 10 à 120 kg/m$^3$, dans lequel si le noir de carbone électriquement conducteur est le noir de Ketjen, il est présent en une quantité de 6 à 14 parties en poids pour 100 parties en poids de la résine de base et si le noir de carbone électriquement conducteur est le noir d'acétylène, il est présent en une quantité de 23 à 27 parties en poids pour 100 parties en poids de la résine de base, et dans lequel le noir de carbone a une taille de particule moyenne de 10 à 80 nm.

5. Procédé de préparation de billes expansées à base de polypropylène selon la revendication 4, dans lequel la résine de polyéthylène est un polyéthylène linéaire à basse densité et/ou un polyéthylène à haute densité.

6. Procédé de préparation de billes expansées de résine à base de polypropylène selon la revendication 4 ou 5, dans lequel les particules de résine sont constituées de la résine de polypropylène qui forme une phase continue et de la résine de polyéthylène qui forme des phases dispersées, dispersées dans la phase continue.

FIG. 1

1          2

FIG. 2

1                    3

FIG. 3

# FIG. 4

**EP 2 799 473 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07304895 A
- JP 2009173021 A
- JP H09202837 A
- JP H10251436 A

- JP 2000169619 A
- EP 1486531 A1
- JP 2004083804 A
- JP 2001151928 A